# EUROPEAN PATENT APPLICATION

(11) **EP 4 293 543 A1**
(43) Date of publication of application: **20.12.2023**
(21) Application number: 23179006.4
(22) Date of filing: 13.06.2023
(51) Int. Cl.: G06F 21/32

(54) **SYSTEM FOR IDENTIFYING A USER OF AN ELECTRONIC DEVICE**

(30) Priority: 17.06.2022 PT 2022118048
(71) Applicant: NOS Inovação, S.A., 4460-191 Senhora da Hora (PT); Associação Almascience - Investigação e Desenvolvimento em Celulose para Aplicacoes inteligentes e sustentaveis, 2829-516 Caparica (PT)
(72) Inventor: PINTO SEQUEIRA DOS SANTOS GRAÇA, Jorge Filipe, SENHORA DA HORA (PT); NUNES FERREIRA, João Miguel, SENHORA DA HORA (PT); PALMA DA SILVA, Carlos André, SENHORA DA HORA (PT); TIDÓ, Emanuele, SENHORA DA HORA (PT); CUNHA FARIA, Nuno, SENHORA DA HORA (PT); AVELÃS RESENDE, João, COSTA DE CAPARICA (PT); SEQUEIRA PEREIRA, Felisberto, LISBOA (PT); BRIGIDA MATIAS, Mariana Sofia, COVILHÃ (PT); SANTOS SILVA FREIRE, Tomás Miguel, ODIVELAS (PT); DIAS LOPES, Alexandra Sofia, ODIVELAS (PT)
(74) Representative: do Nascimento Gomes, Rui

(57) **Abstract**

It is proposed a system for identifying a user interacting with an electronic device via a controller device. The system is based on the self-capacitance phenomenon, and in the measurement of the self-capacitance on the hand of a user holding the controller device, in order to detect hand presence, and to determine a user's specific hand grip pattern as a basis to perform user's identification. To achieve this objective, the system uses a set of electrodes to measure the self-capacitance, said electrodes being integrated into the controller device.

## Description

### TECHNICAL FIELD

The present application relates to capacitance measuring apparatus for determining the identity of a user of an electronic device.

### PRIOR ART

Personalized per-user accounts to interact with and operate electronic devices, play a crucial role in the 21^{st} century industry. Considering the example of a smart TV system, currently, most television content integrated into such smart systems such as smart TVs, boxes from traditional operators and/or, more recently, independent TV Boxes, present personalized content according to the type and/or history of the user. The presentation of personalized content is often crucial to the success of the various platforms that have emerged over the years and that rely on these smart TV systems to make suggestions for movies/series, which appear from the user's account history and data provided by them (such as age groups) at the time of their registration. The presentation of personalized content, to the taste of each user, makes them end up being attracted by these suggestions of content that they most relate to and, later, end up spending a lot of their daily/weekly time on the same platform.

The last point is undoubtedly one of the most adopted strategy points by multiple streaming platforms and others, but the constant request for a user registration is not only related to marketing issues. Regarding the usability of the products, the search history or the automatic recording of certain contents ends up facilitating the user experience. Regarding security issues, knowing that one is browsing on a child's account allows to block children from accessing abusive content, or even restrict programs (+18).

Despite the great advantages for systems to recognize the type of user who interacts them, currently, most systems require an authentication to be done through an authentication procedure. This process is time consuming and in systems such as TVs, this authentication ends up not being performed by users, causing both businesses (in terms of marketing) and users themselves (in terms of user experience and security) to end up losing their advantages regarding the type of technology that television systems currently provide.

Thus, in this era of automation, the search for new solutions that allow the automatic identification of users with external sensors, becomes increasingly frequent and necessary.

There are several sensors, which, incorporated in an electronic device, such as TV set systems, could allow the quick identification of the user (and/or just the type of user) within a household, without using authentication systems or others (such as the insertion of pins) that require the direct intervention of the user. Regarding the solutions already available for this end, the state of the art already discloses:
- Image/audio capture systems, currently low-cost and that, associated with machine learning algorithms, can easily identify the user and the type of user (e.g. face ID and many others). However, these video systems have a major safety disadvantage, since they require a continuous video/image capturing having an impact on issues related to the privacy of the users;
- All contact systems such as fingerprint (still available on several smartphones), bioimpedance, and/or even more innovative systems that use more intrinsic biometric parameters such as ECG to identify users, end up being a more discreet and comfortable solution for users in terms of security and data collection. However, these solutions have two major disadvantages:
   1) They are systems from the point of view of production cost (electronic components) and energy expensive, making them unfeasible for implementation in several electronic devices or systems, such as for example in a smart television system, where it is expected not to increase their cost considerably. Additionally, these systems, especially the bioimpedance systems, end up requiring a lot of energy to operate, which makes their integration less desirable;
   2) In terms of user experience and automation, these contact systems require the user to place the hand/fingers in a specific place for the measurements of biometric signals (in all the mentioned systems the skin must be in contact directly with the electrode(s)) and therefore end up not providing the electronic device with the desired complete automation. Although these techniques are more advantageous than the current authentication techniques, they would still require the user to willingly add this new step to their routine of handling a controller device.

Thus, the known solutions, being more or less complex in technical terms, continue to require a conscious authentication action from the users.

The present solution intended to innovatively overcome such issues.

### SUMMARY OF THE DISCLOSURE

It is therefore an object of the present invention a system for identifying a user of an electronic device. Such system therefore allows a user of an electronic device to authenticate himself without having to actively take some kind of action to that end, either by entering a password or pin, or by positioning his hand or another part of his body on a specific local of the controller device, to allow the collection of biometric signals.

The system is based on the self-capacitance phenomenon, which is characterized as the intrinsic capacitance of an electrically charged object, being potentially measured between an object, in this case a controller device, and the ground. As the human body exhibits this property of self-capacitance, acting like a capacitor, it can be measured on a human hand. Therefore, the self-capacitance response can be measured on the hand of a user, allowing the detection of the hand presence, tracking movements, the determination of the hand grip pattern and the hand size, while holding an object.

In an advantageous configuration of the system of the present disclosure, it is comprised by an acquisition unit, having a plurality of electrodes, and by a control and evaluation unit. The plurality of electrodes is configured to be coupled to a controller device adapted to control the operation of the electronic device, and each of said electrodes is configured to measure self-capacitance signals between an electrically charged part user's hand in contact with the controller device. The combined self-capacitance response of each electrode to the presence of each finger and different regions of the hand-palm can stablish a map of the hand grip pattern of the user holding the object. In its turn, the control and evaluation unit comprise processing means adapted to identify a user based on his specific hand grip pattern determined from the user's hand self-capacitance signals measured by at least two electrodes.

Particularly, the present system may integrate two or more connected electrodes to be placed, inside or externally, in a controller device, such as a remote handheld controller, in order to extract the hand grip pattern and consequently, the hand size of the person holding the controller, thereby identifying the user operating the electronic device, by the analysis of the hand grid pattern.

In a second object of the present disclosure, a control system is described. Said control system comprises an electronic device, a controller device for controlling the electronic device, a system for identifying a user as described in the first object of the present disclosure, and a control logic. Said control logic is configured to, in response to the identification of a user hand grip pattern, control the operation of the electronic device based on a user's profile.

Particularly, considering that the electronic device is a smart TV system, the technology now developed may be used to provide users with customized audio-visual content, pre-selected content or prevent access to certain content (e.g for children). This technology can be used to display pre-selected content to a user of a household. For instance, in a family of four elements, the system can identify the different elements of the household and automatically activate their profile in the TV box, when they hold the controller device.

### DESCRIPTION OF FIGURES

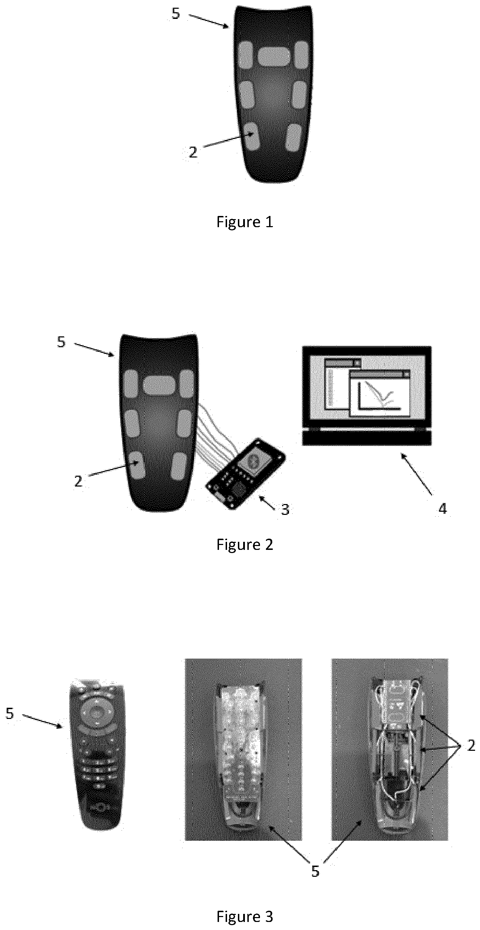

Figure 1 - representation of an embodiment of the system for identifying the user of an electronic device. More particularly, the figure illustrates the proper positioning of the electrodes in order to obtain the user's hand grip pattern. Electrodes can be placed in the external or inner material which the controller device is made of, that is, can be visible or not to the user. In this particular embodiment, 7 electrodes are used, each of said electrodes being substantially rectangular in shape. The reference signs represent:
   - 2 -: electrodes;
   - 5 -: controller device.
Figure 2 - representation of an embodiment of the system for identifying the user of an electronic device, illustrating the acquisition unit, including the set of electrodes and the respective reading module (reader or self-capacitance reader), and the control and evaluation unit where the processing stage occurs. The reference signs represent:
   - 2 -: electrodes;
   - 3 -: reader of the acquisition unit;
   - 4 -: control and evaluation unit;
   - 5 -: controller device.
Figure 3 - representation of an embodiment of the system for identifying the user of an electronic device, wherein the acquisition unit is integrated in a remote handheld TV controller. In this case, considering the size and shape of the controller, 7 electrodes were used, said electrodes being positioned as suggested in Figure 1. The reference signs represent:
   - 2 -: electrodes;
   - 5 -: controller device.

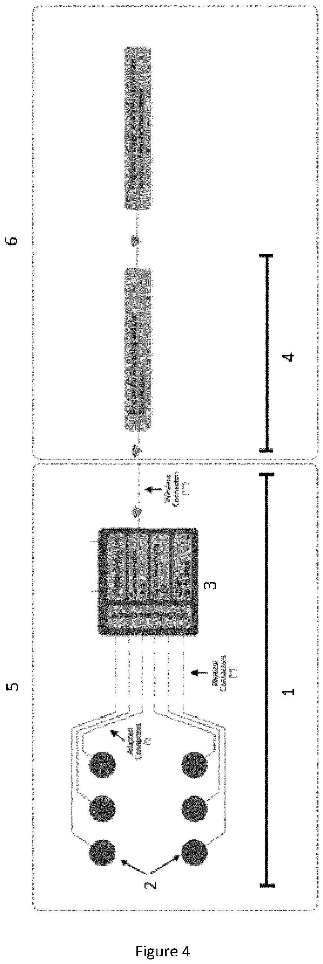

Figure 4 - representation of an embodiment of the control system also described in the present application; said control system including the system for identifying the user of an electronic device as also described in the present application. In this particular embodiment, the control system is used to control a smart TV system. The reference signs represent:
   - 1 -: acquisition unit;
   - 2 -: electrodes;
   - 3 -: reader of the acquisition unit;
   - 4 -: control and evaluation unit;
   - 5 -: controller device;
   - 6 -: electronic device.

### DETAILED DESCRIPTION

The more general and advantageous configurations of the present invention are described in the Summary of the invention. Such configurations are detailed below in accordance with other advantageous and/or preferred embodiments of implementation of the present invention.

The technology developed comprises different technical modules that, combined in an innovative way, allow mapping the user's hand (user specific hand grip pattern) through self-capacitance measurements obtained from multiple electrodes. This system, which in a practical embodiment can be incorporated into a conventional remote handheld TV controller without modifying it and being totally invisible to the user, allows mapping the user's hand (or "handle") without requiring the user to do an additional effort to "activate the system" through conscious positioning of the fingers on the electrodes of the system. The size of the user's hand and the map of the type of handprint that the user leaves when he takes the controller (each user takes the controller in a unique and characteristic way) are sufficient to allow the distinction of user groups through data processing and classification, which receives the handprint data acquired by the electrodes.

In the context of the present application, "user identification" is intended to refer to the identification of a user group in which the user is inserted. Said user group may relate to at least one of the following: age-group, gender, left or right-handed grip among others. Additionally, it may refer to the identification of a user within a finite group of users.

As a possible application, the present solution differentiates between hand sizes, so it can be then used to determine age-groups of the users. The selection of several data elements, by combining the capacitance response of the plurality of electrodes, will then be attributed to the hand size of the user; so, the system can identify the age-group of who is handling the controller device.

The self-capacitance measurements are based on a set of electrode pads to be placed on the surface of the remote control (internally or externally). Said electrode pads may be connected to a self-capacitance reader. The determination of the capacitance measurements of these different electrodes, each of them with a particularly defined area, allow to measure the holding pattern of the user (user specific hand grip pattern) in a particular object, in this case, the controller device. It is important to state that as the measurements are based on a capacitive response, the direct physical contact between the hand and the electrodes improves the measurement but it is not required. The capacitance signal of the hand can be measured transversal to the surface of the controller device, as long as the electrodes are placed in the internal surface of the controller device.

The number of electrodes activated combined with the quantitative response of each can be used to extract the hand grip pattern for each user, enabling, for example, the recognition of the left and right hand of a particular user. Moreover, this measurement allows the determination of the hand size, as it establishes a direct relation between the combined capacitance contribution of the different electrodes and the total area of the hand on the controller device. Furthermore, the system can ultimately differentiate between a set of different hands, within a group of individuals, allowing the identification of the user.

More particularly, the system obeys the following technical principles: i.) individual self-capacitance property, ii.) self-capacitance reading, data communication and control and iii.) processing and classification methods applied by a computer program that will make a final processing of the data in order identify a user (that is, to classify the type of user).

### i.) individual self-capacitance property

The present solution follows the technical concept of self-capacitance. That is, when a user's hand or finger approaches a single electrode a variation of this property occurs due to the conductive capabilities of the human body, even if the person does not touch the electrode directly. It is this effect that is manipulated in order to be able to extract the hand grip pattern and to measure the user's hand size, together with the following:
- Since the solution assumes that the electrodes can be integrated into a controller device, which is typically made of plastic, it is necessary that the materials and/or shape and/or area and/or any property that involves variations in self-capacitance be changed, in order to amplify the variation of the self-capacitance of the electrode, since, it is intended that there is a significant signal variation when a hand is placed close to the electrode (even if separated by plastic) in relation to the baseline of the self-capacitance signal of that electrode. For this, several layers of conductive material (e.g. copper, silver, gold or carbon) may be used to increase the electrode response when it is placed behind plastic. This implies a change in the electrode design, so that its spatial structure is optimized.
- In terms of integration, the solution was designed not to influence the controller's operation, nor to change its aesthetic appearance. Particularly, considering an example of embodiment where the controller is a remote handheld TV controller, the electrodes can be printed on a cellulose-based material or painted in the internal surface of the controller, being hidden between the plastic layers of said controller.
- A minimum number of electrodes is required, which are optimally arranged within the controller device, allowing different hand grip patterns to be distinguished. Only the organization of the electrodes in a certain way will allow to monitor these hand grip patterns. Of course, this is dependent on the ergonomics of the controller device and the placement of the user's hand (handle). Figure 1 represents an example of proper positioning of the self-capacitance electrodes to solve the technical problem related to the measurement of the hand size, without physical interference from the user (having to touch the electrodes) or activity (having to remember that you have to touch the electrodes) with low-cost and energy-efficient materials. The number of electrodes used, and their arrangement will also depend on the type of controller device used, in particular its shape and size.

### ii.) self-capacitance reading, data communication and control

Each electrode can be connected to a reader for self-capacitance measurement. The reader may be a commercially available microcontroller. The self-capacitance of a system can be measured in multiple ways. In one embodiment, a conventional process can be used, which allows sufficient measurements for this purpose through the use of touch pin sensors of the microcontroller, for example a ESP32, by varying the voltage repeatedly at a certain frequency. Alternatively, self-capacitance measurement pins can be developed, with frequency optimization depending on the type of object to be detected.

In addition to the self-capacitance reader, the system comprises technical means responsible for 1) processing the acquired self-capacitance data measured from electrodes and 2) sending the data (for example, wirelessly) to the control and evaluation unit, which will be responsible for the final processing and data classification through the optimized set of self-capacitance reader and electrode arrangement, in order to obtain user identification.

The set of electrodes and reader, to be integrated in the controller, can be powered directly from the controller batteries.

### iii.) processing and classification methods

Finally, the control and evaluation unit is responsible for classifying the type of user through the extracted data, using the data collected by the reader, and executing classification algorithms, for example of the decision tree type, to determine the user's identity. In a practical embodiment, the control and evaluation unit is included in the electronic device to be controlled, for example a set-top box for controlling the audio-visual contents to be made available to the user.

The classification algorithm, when used on the self-capacitance data collected by the electrodes (or user's hand grip pattern data), allows the determination of the size of the user's hand, and based on that to understand whether it is an adult or a child operating the electronic device. However, these same data can be used for a more detailed identification of the user, for example, the identification of the user in a family of up to 5 elements, for example. The choice of the classification algorithm used may vary with the type of user identification required, that is, the decision tree classification algorithm used for age's group identification may not fit a gender-group identification. Thus, the classification algorithm can be adapted according to the type of user's identification problem.

The system now developed may be integrated with the operation of an electronic device in an easy and cost-effective way. The integration with the controller device used to operate de electronic device may be made using flexible electronic contacts (electrodes) on paper and connected to small size electronics control elements. In a particular embodiment, the following elements are present in the system:
at least two electrodes arranged in a winding way, forming the acquisition unit, and being placed inside a controller device, and individually connected to a self-capacitance reader;
a self-capacitance reader, comprising a microcontroller, a wireless communication unit; The acquisition unit may be from an extra module attached to microcontroller, or programmed internally in the microcontroller.
an algorithm running on the microcontroller to detect the number of electrodes being touched, in a case of being used as a remote handheld TV controller, for automatically activating the TV when it is touched, etc.
the set of the electrodes, the self-capacitance reader, and the algorithm comprises a system that extract biometric features from the user (small or big hands) for remote and programable contents (on TV in case it makes senses to make it only to protect this specific case of controller devices etc.).

In another aspect of the present disclosure, as can be seen in Figure 2, a remote handheld TV controller can be altered in order to incorporate the acquisition unit, in particular the set of electrodes. In this particular embodiment, the electrodes are made of copper and can be printed on paper, acquiring the characteristic of being flexible, being applied inside the controller, together with the technical means responsible for reading and communication data to the control and evaluation unit (for example, the ESP32 may be used). The most favourable electrode set depends on the shape and size of the remote handheld controller. Thus, taking into account its typical shape and size, 7 electrodes (1 cm x 3 cm) may be used - 2 pairs of 3 electrodes on each side and one on the central part.

The preferred realization of this solution implies the integration of the acquisition unit in a controller of an electronic device. This integration is mainly based on the assumptions of not changing the electrical structure of the controller or its appearance. This is achieved through the use of self-capacitance technology that allows the electrodes to be placed inside the control and remain invisible to the user. Alternatively, but respective the same assumptions, the electrodes could be printed on a film to be applied to the external surface of the controller.

### EMBODIMENTS

The present application relates to a system for identifying a user of an
electronic device.

In a preferred embodiment of the system, it is comprised by:
an acquisition unit, comprising a plurality of electrodes;
a control and evaluation unit;
wherein,
the plurality of electrodes is configured to be coupled to a controller device adapted to control the operation of the electronic device; each of said electrodes being configured to measure self-capacitance signals between an electrically charged user's hand in contact with the controller device and a ground; and
the control and evaluation unit comprises processing means adapted to identify a user based on his specific hand grip pattern determined from the user's hand self-capacitance signals measured by at least two electrodes.

Thus, by means of this arrangement, the system allows a user of an electronic device to authenticate himself without having to actively take some kind of action to that end, either by entering a password or pin, or by positioning his hand or another part of his body, to allow the collection of biometric signals. Therefore, it is not necessary for the user to perform an additional effort to "activate the system", through conscious action of authentication.

In one embodiment of the system, each of the electrodes is in a position with respect to the others, such that the plurality of electrodes configures an area contacting at least a part of the user's hand, for example, when electrodes are placed on the outer surface of the controller. Alternatively, each of the electrodes is in a position with respect to the others, such that the plurality of electrodes configures an area being in close proximity to at least a part of the user's hand, through the controller device surface. Close proximity means that there is no direct contact between the electrodes and the user's hand, as the electrodes are place inside the controller device.

In another embodiment of the system, the plurality of electrodes is composed of layers of electrically conductive materials, such as, metals or carbon-based materials.

Yet in another embodiment of the system, each electrode has a surface with a defined area, above 1 mm². Each of said electrodes may be conformably placed on an inner or on an outer surface of the controller device.

Yet in another embodiment of the system, each electrode has a rectangular shape; preferably being 1 cm x 3 cm in size. Additionally, in another embodiment, the acquisition unit comprises at least 5 electrodes. The number of electrodes and its area, i.e. shape and size, are variable, without detracting from the inventive concept underlying the technology developed, being dependent on the size and shape of the controller device.

Yet in another embodiment of the system, the processing means of the control and evaluation unit is programmed to:
- determine the size a user's hand based on the user's hand grip pattern and
- identify the age group of the user based on the user's hand size.

Yet in another embodiment of the system, the acquisition unit comprises at least 2 electrodes and the processing means of the control and evaluation unit being programmed to:
- distinguish between right and left hand holding the controller device based on the user's hand grip pattern.

Yet in another embodiment of the system, the processing means of the control and evaluation unit are adapted to implement a data classification algorithm, said data classification algorithm being, for example, a decision tree algorithm.

Yet in another embodiment of the system, the acquisition unit and the control and evaluation unit are connected to each other by means of a data transmission cable, or a wireless communication data link. Said wireless communication data link being, for example, Bluetooth, Wi-Fi or Infrared.

Yet in another embodiment of the system, the control and evaluation unit further comprises a communication module configured to establish a datalink communication with at least one external entity, wherein the datalink communication is adapted to transmit information related with at least the user hand grip pattern. In another embodiment, the datalink communication is a wireless datalink, preferably Bluetooth or Wi-Fi.

The present application also discloses a control system.

In a preferred embodiment of the control system, it is comprised by:
an electronic device; said electronic device being controllable by a controller device;
the system for identifying a user of an electronic device previously described;
a control logic configured to, in response to the identification of a user hand grip pattern, adapt the operation of the electronic device based on a user's profile. Said adaptation means that the user's interaction with the electronic device may be limited according to his user profile. Considering a practical example of implementation, in which the electronic device is a smart TV system, the contents to be made available to a user will be dependent, for example, on the age group to which the user belongs.

In one embodiment of the system, the electronic device is a loT device. Alternatively, the electronic device is a Set-Top box or a television, and the controller device is a handheld remote controller device.

In a preferred embodiment of the control system, it is comprised by:
an electronic device; said electronic device being a smart surface device;
the system for identifying a user of an electronic device previously described placed on a smart surface device for a smart home system;
a control logic configured to, in response to the identification of a user hand pattern placed on the smart surface, adapt the operation of the smart surface device based on a user's profile.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. System for identifying a user of an electronic device, comprising:
an acquisition unit (1), comprising a plurality of electrodes (2);
a control and evaluation unit (4);
wherein,
the plurality of electrodes (2) is configured to be coupled to a controller device (5) adapted to control the operation of the electronic device (6); each of said electrodes (2) being configured to measure self-capacitance signals between an electrically charged user's hand in contact with the controller device (5) and a ground; and
the control and evaluation unit (4) comprises processing means adapted to identify a user based on his specific hand grip pattern determined from the user's hand self-capacitance signals measured by at least two electrodes (2).

2. System according to claim 1, wherein each of the electrodes (2) is in a position with respect to the others, such that the plurality of electrodes (2) configures an area contacting at least a part of the user's hand.

3. System according to claim 1, wherein each of the electrodes (2) is in a position with respect to the others, such that the plurality of electrodes configures an area being in close proximity to at least a part of the user's hand, through the controller device (5) surface.

4. System according to any of the previous claims, wherein the plurality of electrodes (2) being composed of layers of electrically conductive materials, such as, metals or carbon-based materials.

5. System according to any of the previous claims, wherein each electrode (2) has a surface with a defined area, above 1 mm²; each electrode being conformably placed on an inner surface of the controller device.

6. System according to any of the previous claims 1 to 5, wherein each electrode (2) has a surface with a defined area, above 1 mm²; each electrode being conformably placed on an outer surface of the controller device.

7. System according to any of the previous claim, wherein each electrode (2) has a rectangular shape; preferably being 1 cm x 3 cm in size.

8. System according to any of the previous claims, wherein the acquisition unit (1) comprises at least 5 electrodes; wherein
the processing means of the control and evaluation unit (4) being programmed to:
- determine the size a user's hand based on the user's hand grip pattern and
- identify the age group of the user based on the user's hand size.

9. System according to any of the previous claims 1 to 7, wherein
the acquisition unit (1) comprises at least 2 electrodes (2) and the processing means of the control and evaluation unit (4) being programmed to:
- distinguish between right and left hand holding the controller device (5) based on the user's hand grip pattern.

10. System according to any of the previous claims, wherein the processing means of the control and evaluation unit (4) are adapted to implement a data classification algorithm; wherein the data classification algorithm is a decision tree algorithm.

11. System according to any of the previous claims, wherein the acquisition unit (1) and the control and evaluation unit (4) are connected to each other by means of a data transmission cable, or a wireless communication data link; wherein, the wireless communication data link is Bluetooth, Wi-Fi or Infrared.

12. System according to any of the previous claims, wherein the control and evaluation unit (4) further comprises a communication module configured to establish a datalink communication with at least one external entity; the datalink communication being adapted to transmit information related with at least the user hand grip pattern; wherein, the datalink communication is a wireless datalink, preferably the wireless datalink communication is Bluetooth or Wi-Fi.

13. A control system, comprising:
an electronic device (6); said electronic device being controllable by a controller device;
the system for identifying a user of an electronic device of claims 1 to 12;
a control logic configured to, in response to the identification of a user hand grip pattern, adapt the operation of the electronic device (6) based on a user's profile.

14. System according to claim 13, wherein the electronic device (6) is a loT device.

15. System according to claim 13, wherein the electronic device (6) is a Set-Top box or a television, and the controller device (5) is a handheld remote controller device.
